Europäisches Patentamt

European Patent Office

Office européen des brevets

(19)

(11) Publication number: **0 173 426**
A1

(12) # EUROPEAN PATENT APPLICATION

(21) Application number: 85304361.0

(22) Date of filing: 19.06.85

(51) Int. Cl.⁴: **F 16 B 7/02**
// B64D29/06

(30) Priority: 22.06.84 GB 8416019

(43) Date of publication of application: 05.03.86
Bulletin 86/10

(84) Designated Contracting States: DE FR GB IT SE

(71) Applicant: BRITISH AEROSPACE PUBLIC LIMITED
COMPANY, 100 Pall Mall, London SW1Y 5HR (GB)

(72) Inventor: Howard, Raymond Britisch Aerospace PLC.,
Woodford Aerodrome Chester Road, Woodford Cheshire,
SK7 1QR (GB)

(74) Representative: Saul, David Jonathan et al, British
Aerospace plc Corporate Patents Dept. Brooklands
Road, Weybridge Surrey KT13 0SJ (GB)

(54) **Structural joint.**

(57) A structural joint for use in applications where it will be subject to high end loads and fatique loadings comprises first and second load-carrying members (10, 11) each terminating in a boss sector portion (13, 14) having an inner concave bearing surface (17, 18) and first and second axially spaced outer convex bearing surfaces (15, 15', 16, 16'), an intermediate compression member (19/28/29) having opposed convex surfaces against which the inner concave bearing surfaces (17, 18) of the boss-sector portions (13, 14) bear, first and second axially spaced ring means (21, 22) engaging the first and second outer convex bearing surfaces (15, 16 and 15', 16') respectively, and preload means (24, 25) operable relatively to urge the ring means (21, 22) against the boss-sector portions (13, 14).

# STRUCTURAL JOINT

This invention relates to a structural joint of the type adapted releasably to couple two members which, in use, carry high end loads and are subject to fatigue loadings.

In the aircraft industry, such couplings are commonly used in arrangements such as engine mountings, undercarriage and jack mountings etc. Conventionally, these couplings are in the form of a lug and fork end connected by a shear pin. These couplings, however, suffer from the disadvantage that the critical fatigue prone tensile components in use are hidden from view and thus the coupling must first be taken apart to allow for proper inspection of the coupling. In addition, the conventional lug and fork end joint does not allow preloading of the joint to minimise fretting. Furthermore, it is not possible to accommodate wear in this type of joint; in the event of wear, the joint must be replaced.

According to one aspect of this invention, there is provided a structural joint including first and second load-carrying members each terminating in a boss-sector portion having an inner concave bearing surface and first and second axially spaced outer convex bearing surfaces, an intermediate compression member having opposed convex surfaces against which the inner concave bearing surfaces of the boss-sector portions bear, first and second axially spaced ring means engaging the first and second outer convex bearing surfaces respectively, and preload means operable relatively to urge the ring means against the boss-sector portions. By this arrangement, the parts of the joint which will be subject to tensile loading and thus prone to fatigue are located to the outside of the joint. This allows easy inspection of the critical components of the joint. Moreover, the joint may be inspected piecewise without destroying its integrity by inspecting and replacing each ring in turn. The joint may be preloaded to avoid fretting and this adjustment facility may also be used to accommodate any wear that occurs.

In one arrangement the structural joint includes end cap means associated with each of said ring means for transmitting load from said preload means to said ring means.

In another arrangement each ring means includes an end cap formed integrally therewith.

In one aspect of the invention the inner surface region of each ring means and each of said outer convex bearing surfaces are complementarily tapered and said preload means comprises screw threaded means for effecting relative axial movement of the ring means towards each other.

Conveniently said screw-threaded adjustment means includes a bolt extending axially through said intermediate compression member and said ring means and thereby threadedly carrying a nut. Alternatively said screw-threaded adjustment means may comprise twin opposed threaded stubs extending axially from said compression member and nuts engaging each stub.

In another aspect of the invention, the inner surface region of each ring means and each of said outer convex bearing surfaces are generally cylindrical and said intermediate compression member comprises a tapered pin and associated split sleeves, and said preload

means comprising screw threaded adjustment means for effecting relative axial movement of said pin with respect to said split sleeves thereby to effect expansion of said intermediate compression member.

By way of example only, four specific embodiments of structural joint of this invention will now be described in detail, reference being made to the accompanying drawings, in which:

Figures la and lb are views in cross-section and elevation respectively of a first embodiment of an aircraft structural joint;

Figure 2 is a view in cross-section of a second embodiment of an aircraft structural joint;

Figure 3 is a view in cross-section of a third embodiment of an aircraft structural joint;

Figure 4 is a view in cross-section of a fourth embodiment of an aircraft structural joint, and

Figure 5 is a plan view of a structure including the structural joint of Figure 1.

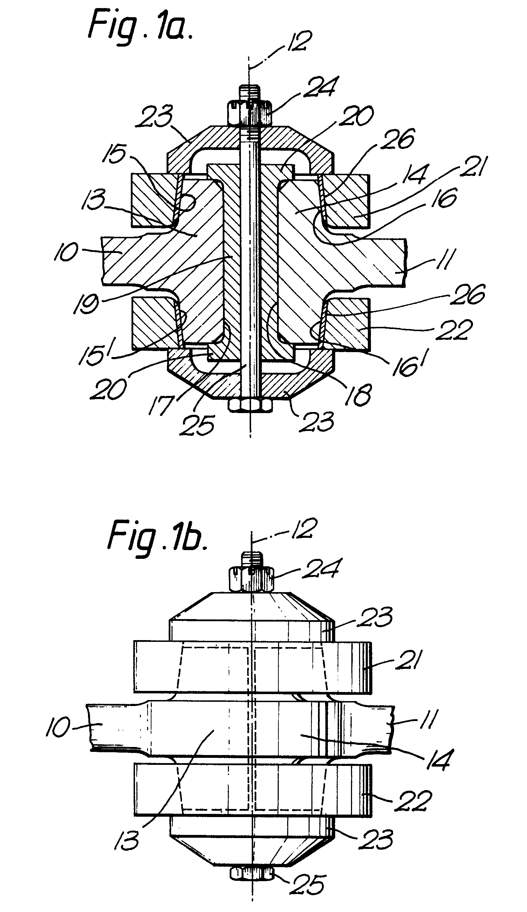

Referring initially to Figure 1, the first embodiment of structural joint includes first and second strut members 10 and 11, each terminating substantially equidistantly about a datum line 12 lying perpendicular to the line of action of the applied load. The end portion of each member 10,11 is formed as a semi-circular boss 13,14 respectively having spaced tapered convex annular bearing surfaces 15,15' and 16,16'. The end face of each boss is provided with a semi-circular groove 17,18, generally coaxial with datum line 12, which engages in close abutment a bearing pin 19. The bearing pin is provided with shoulders 20 at each end to provide lateral support for the bosses 13,14. First and second clamp rings 21,22, each having an internal taper, engage the spaced tapered annular bearing surfaces 15,15' and 16,16'. Two end caps 23 engage the end faces of the clamp rings and are retained in position in this arrangement by means of a single nut 24 and bolt 25 passing through the bearing pin 19. In use, the arrangement is preloaded to the required degree to prevent fretting by tightening and then locking nut 24. In addition, in the event of wear occurring in the joint, this may be taken up by adjustment of nut 24. In order to ensure that wear takes place on a replaceable item, rather than on the semi-circular bosses, the clamp rings 21,22 may each be provided with an internal bush 26.

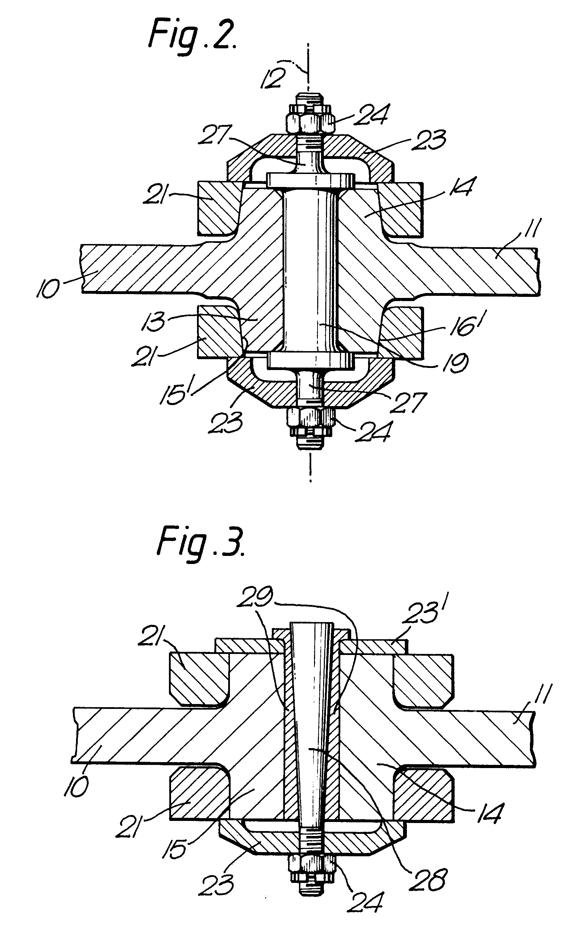

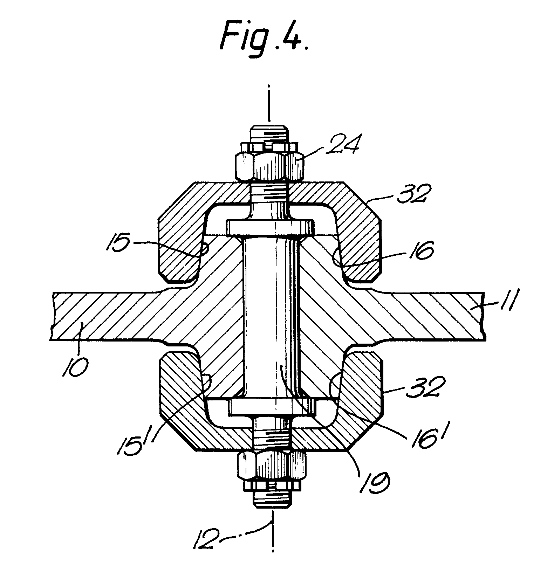

Referring to Figures 2,3 and 4, second, third and fourth embodiments of joint are illustrated. In these Figures, similar items will be given similar reference numerals and will not be described in detail.

In the second embodiment illustrated in Figure 2, the bearing pin 19 is provided at each end with a threaded spigot 27 and nuts 24, in place of the single through bolt, for locating and adjusting the end caps 23, to allow preloading the joint.

In the third embodiment, instead of effecting preloading by causing effective contraction of clamp rings 21,22 on to the bosses 13,14, preloading is effected by causing the bearing pin 19 to expand. In this arrangement, the composite bearing pin comprises an inner tapered pin member 28 and split tapered bushes 29. The

- 5 -

bushes 29 have shoulders engaging an annular end cap 23', and the tapered pin is provided with a threaded spigot 27 and nut 24 engaging the opposed end cap 23, and preloading is effected by tightening nut 24. In this arrangement, the requirement for complementary tapers on the clamp ring and the bosses is obviated. The end caps 23 and 23' in this embodiment prevent lateral movement of the clamp rings and the bosses 13 and 14.

In the fourth embodiment, each end cap 32 is formed integrally with the associated clamp ring. In all other respects, the embodiment is similar to the second embodiment. It will however be appreciated that the various alternative features shown in the other embodiments may also be used in the fourth embodiment.

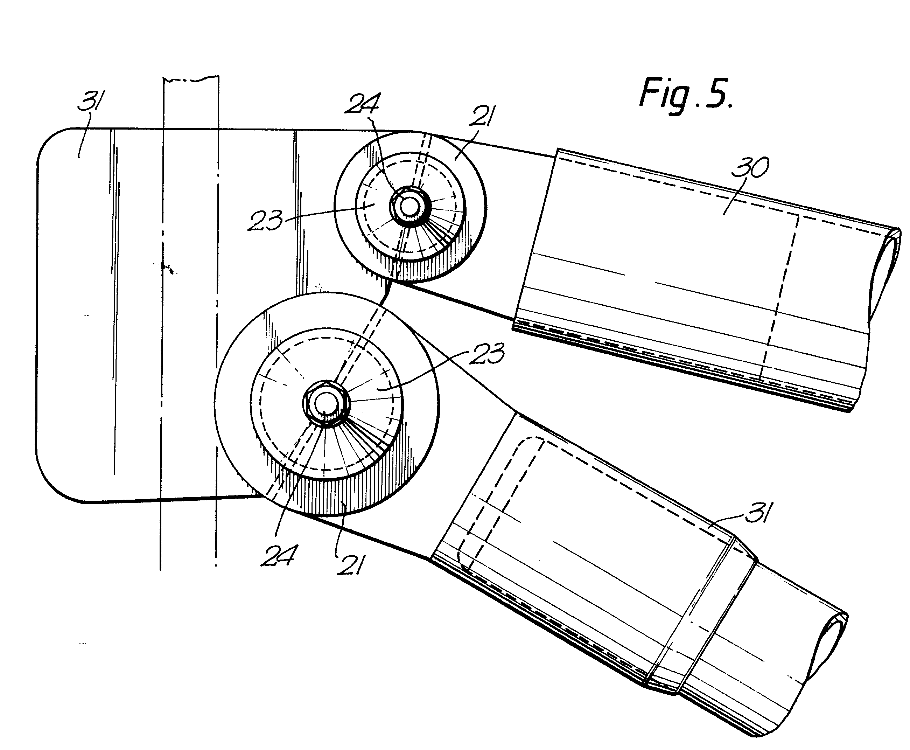

Referring to Figure 5, a typical aircraft application for the structural joint of this invention is illustrated. In this arrangement, load carrying struts 30, 31 are connected at one end to the powerplant casing (not shown) and at their other ends to a bulkhead fitting 32 via structural joints of this invention. In this type of application, the struts are subject to very high end loads, both in tension and compression, and consequently the structural joint is prone to fatigue. As compared, however, to conventional lug and fork end joints, the main tensile members, i.e. the clamping rings 21,22, are located at the outside of the joint and thus are easily removable for inspection of the rings or bosses without disturbing the assembly as a whole. The rings also may be considered as replaceable items. In addition, as compared to the conventional arrangements, a direct compressive load path exists through the abutment of the adjacent component parts on the interconnecting bearing pin. The ability to apply an adjustable preloading on the joint allows a reduction in the variation of tensile stress levels with a resultant improvement in fatigue life. This feature also allows wear to be taken up by adjustment of the joint.

In the illustrated arrangements, the joint is shown connecting two load bearing members; it will however be appreciated that the arrangement may easily be developed to connect three or more load bearing members located generally within the same plane. For example a three way joint could be constituted by providing each load carrying member with a boss-sector portion having an included angle of $120^{\circ}$.

## CLAIMS

1. A structural joint including first and second load-carrying members (10,11) each terminating in a boss-sector portion (13,14) having an inner concave bearing surface (17,18) and first and second axially spaced outer convex bearing surfaces (15,15', 16,16'), an intermediate compression member (19/28/29) having opposed convex surfaces against which the inner concave bearing surfaces (17,18) of the boss-sector portions (13,14) bear, first and second axially spaced ring means (21,22) engaging the first and second outer convex bearing surfaces (15,16 and 15',16') respectively, and preload means (24,25) operable relatively to urge the ring means (21,22) against the boss-sector portions (13,14).

2. A structural joint according to Claim 1 wherein end cap means (23) are associated with each of said ring means (21,22) for transmitting load from said preload means (24,25) to said ring means (21,22).

3. A structural joint according to Claim 1, wherein each ring means includes an end cap formed integrally therewith.

4. A structural joint according to any of the preceding claims wherein the inner surface region of each ring means (21,22) and each of said outer convex bearing surfaces (15,16 and 15'16') are complementarily tapered and said preload means comprises screw threaded means (24,25) for effecting relative axial movement of the ring means towards each other.

5. A structural joint according to Claim 4, wherein said screw-threaded adjustment means includes a bolt (25) extending axially through said intermediate compression member (19) and said ring means (12,22) and thereby threadedly carrying a nut 24.

6. A structural joint according to Claim 4, wherein said screw-threaded adjustment means comprises twin opposed threaded stubs (27) extending axially from said compression member (19) and nuts (24) engaging each stub (27).

7. A structural joint according to any of Claims 1 to 3, wherein the inner surface region of each ring means (21,22) and each of said outer convex bearing surfaces (15,16 and 15',16') are generally cylindrical and said intermediate compression member comprises a tapered pin (28) and associated split sleeves (29), said preload means comprising screw threaded adjustment means (24) for effecting relative axial movement of said pin (28) with respect to said split sleeves (29) thereby to effect expansion of said intermediate compression member.

8. A structural joint according to any of the preceding Claims, wherein each ring means (21,22) is provided with an internal bush (26).

Fig. 1a.

Fig. 1b.

Fig.2.

Fig.3.

# Fig.4.

Fig. 5.

0173426

0173426

European Patent Office

**EUROPEAN SEARCH REPORT**

Application number

EP 85 30 4361

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | FR-A- 923 264 (DIVORNE) <br> * Page 2, lines 20-84; figures 1-10 * | 1-6 | F 16 B 7/02 // <br> B 64 D 29/06 |
| A | BE-A- 436 404 (CENTNER et al.) <br> * Page 1, last line - page 2, line 1; figures * | 1 | |
| X | BE-A- 364 239 (DOORNBOS & VIJGEBOOM) <br> * Page 4, line 1 - page 5, line 10; figures 4,5 * | 1-3 | |
| Y | | 7 | |
| Y | FR-A-2 291 091 (S.N.E.C.M.A.) <br> * Figure 6 * | 7 | TECHNICAL FIELDS SEARCHED (Int. Cl.4) <br><br> B 64 D <br> E 04 B <br> F 16 B |

The present search report has been drawn up for all claims

| Place of search | Date of completion of the search | Examiner |
|---|---|---|
| THE HAGUE | 04-10-1985 | VAN DER WAL W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82